# EUROPEAN PATENT SPECIFICATION

(11) **EP 0 645 591 B1**
(45) Date of publication and mention of the grant of the patent: **03.12.1997**
(21) Application number: 94830441.5
(22) Date of filing: 20.09.1994
(51) Int. Cl.: F24H 1/32

(54) **Improved high-efficiency modular boiler for heating systems**
Brennwertkessel in Modulbauweise für Heizungsanlagen
Chaudière modulaire à haut rendement pour systèmes de chauffage

(30) Priority: 22.09.1993 IT MI930732 U
(43) Date of publication of application: 29.03.1995
(73) Proprietor: FERROLI S.p.A., I-37047 San Bonifacio (Verona) (IT)
(72) Inventor: Ferroli, Dante, c/o FERROLI S.p.A., I-37047 San Bonifacio (Verona) (IT)
(74) Representative: Cicogna, Franco

(56) References cited:
- EP-A- 0 404 259
- EP-A- 0 547 641
- AT-B- 387 272

## Description

### BACKGROUND OF THE INVENTION

The present invention relates to an improved modular construction boiler, for heating systems, provided with a burner for burning an air-gas mixture, and which has been specifically designed for reducing the emission to atmosphere of polluting substances, such as nitrogen oxides and carbon oxides, and to provide an efficiency as high as possible with a condensing of the combustion products.

There are already available on the market a plurality of types of boilers for heating systems, which operate by burning gaseous substances and by condensing the combustion products, as for example EP-A-0547641.

Prior boilers of the above mentioned types have the drawback that they are greatly complex, from a constructional standpoint, and in particular with respect to the cooling systems inside the burner associated therewith, in order to reduce the admission of the polluting substances.

Accordingly, the above prior boilers have a comparatively high cost, since they are constructed with production cycles requiring comparatively long times.

### SUMMARY OF THE INVENTION

The document EP-A-0547641 discloses an improved modular construction boiler having essentially the features of the preamble of the main claim.

Thus, the aim of the present invention is to overcome the above mentioned problems and drawbacks, by providing a heating system boiler , including an improved cooling system, and having a modular construction comprising elements which can be easily assembled to one another, so as to greatly reduce the making time and cost of the boiler.

Within the scope of the above mentioned aim, a main object of the present invention is to provide such a boiler which is very competitive from a mere economic standpoint.

Another object of the present invention is to provide such a boiler for heating systems which has a very low emission of polluting substances, with a very high thermal efficiency and condensing of the combustion products.

Yet another object of the present invention is to provide such an improved boiler, for heating systems, which is very reliable and safe in operation.

According to one aspect of the present invention, the above mentioned aim and objects, as well as yet other objects, which will become more apparent hereinafter, are achieved by an improved modular construction boiler for heating systems, particularly designed for reducing the emission of polluting substances, according to the main claim.

### BRIEF DESCRIPTION OF THE DRAWINGS

Further characteristics and advantages of the present invention will become more apparent hereinafter from the following detailed disclosure of a preferred, though not exclusive, embodiment of the boiler according to the invention, which is illustrated, by way of an indicative example, in the figures of the accompanying drawings, where:
Figure 1 is a front cross-sectional view illustrating the main component parts of the improved boiler according to the invention, comprising two metal constructions or assemblies assembled on the sides of an intermediate construction or assembly, and provided with side walls having a plurality of cooling fins, so as to provide a pair of heat exchangers;
   and
Figure 2 is a cross-sectional top plan view of the boiler shown in Figure 1, in which there are illustrated further cooling fins provided on the top surface of the combustion chambers.

### DESCRIPTION OF THE PREFERRED EMBODIMENT

With reference to the number references of the above mentioned figures, the boiler for heating systems, which has been generally indicated at the reference number 1, is characterized in that it comprises a modular construction including several modules.

The making of this modules is performed in a very reduced time and, accordingly, the modules will have a very reduced and competitive cost.

More specifically, each modular element of the boiler comprises two metal constructions or assemblies 2, each of which includes a closed gap 3, containing water in its inside; the side wall 4 of said gap being so arranged as to present a plurality of cooling fins 5.

The assemblies 2 are suitably assembled on the side of one or more intermediate metal assemblies or constructions 6, each of which comprises a further closed gap 7, holding water therein, the two side walls of which being provided with cooling fins 8, which have a shape like that of the above mentioned cooling fins 5.

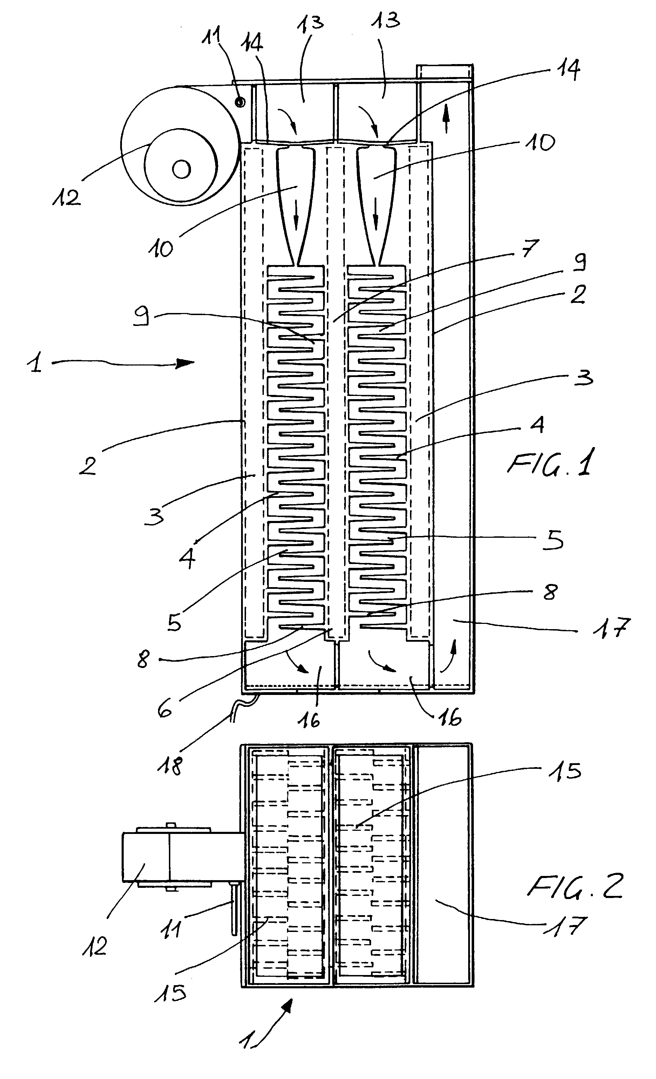

The above mentioned assembling of the modules, which can be easily performed by using known assembling methods, will allow to provide ducts 9, of coil configuration which, as shown in Figure 1, will operate as heat exchangers.

On the top of each heat exchanger 9 there is provided a combustion chamber 10, or burner, in which can be burned the mixture of a gaseous fuel, obtained by a pre-mixing of a gaseous substance and air.

In particular, this is obtained by introducing a gas, from a tubular duct 11, into the inside of a fan 12.

This fan 12 will send the produced gas and air mixture inside said chamber 10, through suitable ducts 13 and grates 14, made of any suitable materials.

The top surface of each chamber 10 is moreover provided with a plurality of cooling fins 15, which are shown in Figure 2, and will operate for cooling the grates 14.

At the bottom thereof, each heat exchanger 9 communicates by means of a duct 16, arranged at the bottom end portion of the boiler 1, and provided with a pipe 18 for discharging or draining therefrom the condensed combustion products.

Thus, during the combustion step of the gaseous mixture, which is performed in the chambers 10, because of a spark generated between the pointed tips of a known construction electrode device, the generated heat will be diffused through the walls of the heat exchangers 9, which, as shown, have a coil configuration.

In particular, said walls of the heat exchangers 9 will be cooled by the water circulating inside the side gaps 3 and through the gap 7.

The flue gas will be quickly ejected from a stack 17, arranged laterally of the boiler 1, by passing through the above mentioned ducts 16.

From the above disclosure it should be apparent that the invention fully achieves the intended aim and objects.

In practicing the invention, the used materials, provided that they are compatible to the intended use, as well as the contingent size and shapes, can be any, depending on requirements.

## Claims

1. An improved modular construction boiler for heating systems, particularly designed for reducing the emission of polluting substances, said boiler (1) comprising a plurality of boiler modules, each comprising two side metal assemblies (2), each of said assemblies (2) including a closed gap (3), the side wall of which is provided with a plurality of cooling fins (5), so as to provide suitable heat exchangers (9) on the top of which there are provided combustion chambers (10) for burning therein a gaseous substance pre-mixed with air, and said two side metal assemblies (2) being adapted to be assembled on the sides of one or more intermediate metal assemblies (6), each of which comprises a further closed gap (7), the two side walls of which are provided with a plurality of cooling fins (8).

2. An improved heating system boiler, according to Claim 1, characterized in that said closed gaps (7) are adapted to hold therein water for cooling said heat exchangers (9).

3. An improved heating boiler according to Claims 1 and 2, characterized in that said heat exchangers (9) have a coil inner configuration.

4. An improved heating boiler according to one or more of the preceding claims, characterized in that said pre-mixing of gas and air is performed by introducing gas, through a tubular duct (11), inside a fan (12) which will send the gas-air mixture inside said combustion chamber (10), through suitable ducts (13) and grates (14).

5. An improved heating boiler according to one or more of the preceding claims, characterized in that the top surface of each said combustion chamber (10) is provided with a plurality of cooling fins (15) for cooling said grates (14).

6. An improved heating boiler according to one or more of the preceding claims, characterized in that each said heat exchanger (9) communicates, at the bottom thereof, with a duct (18) arranged at the bottom end portion of the boiler (1), said duct (18) being adapted to discharge therefrom the condensed combustion products.

7. An improved heating boiler according to one or more of the preceding claims, characterized in that the flue gas is discharged from a stack (17) arranged laterally or at the rear of said boiler (1).

## Patentansprüche

1. Ein Brennwertkessel modularer Bauweise für Heizanlagen, entworfen insbesondere zur Verringerung des Ausstoßes umweltschädlicher Substanzen, wobei dieser Heizkessel (1) eine Vielzahl von Heizmodulen umfaßt, von denen jeder zwei metallene Seitenteile (2) einschließt und jedes dieser Teile (2) einen geschlossenen Zwischenraum (3) umfaßt, dessen Seitenwand mit einer Vielzahl von Kühlrippen (5) ausgestattet ist, so daß geeignete Wärmeaustauscher (9) bereitgestellt werden, auf deren oberem Ende Brennkammern (10) zur Verbrennung darin einer mit Luft vorgemischten gasförmigen Substanz bereitgestellt sind, und wobei diese zwei metallenen Seitenteile (2) angepaßt sind, auf den Seiten eines oder mehrerer metallener Zwischenteile (6) angebracht zu werden, von denen jedes einen weiteren geschlossenen Zwischenraum (7) umfaßt, dessen zwei Seitenwände mit einer Vielzahl von Kühlrippen (8) ausgestattet sind.

2. Ein Brennwertkessel für Heizanlagen nach Anspruch 1, dadurch gekennzeichnet, daß diese geschlossenen Zwischenräume (7) angepaßt sind, Wasser zum Kühlen dieser Wärmeaustauscher (9) dann zu enthalten.

3. Ein Brennwertkessel nach Anspruch 1 und 2, dadurch gekennzeichnet, daß die innere Gestalt dieser Wärmeaustauscher (9) die einer Spirale ist.

4. Ein Brennwertkessel nach einem oder mehreren der vorhergehenden Ansprüche, dadurch gekennzeichnet, daß dieses Vormischen von Gas und Luft durchgeführt wird, indem Gas durch eine Rohrleitung (11) in einen Ventilator (12) geleitet wird, der die Gas/Luft-Mischung durch geeignete Leitungen (13) und Roste (14) in diese Verbrennungskammer (10) befördert.

5. Ein Brennwertkessel nach einem oder mehreren der vorhergehenden Ansprüche, dadurch gekennzeichnet, daß die obere Fläche jeder dieser Verbrennungskammern (10) mit einer Vielzahl von Kühlrippen (15) zum Kühlen dieser Roste (14) ausgestattet ist.

6. Ein Brennwertkessel nach einem oder mehreren der vorhergehenden Ansprüche, dadurch gekennzeichnet, daß jeder dieser Wärmeaustauscher (9) an seinem Boden mit einer Leitung (18) in Verbindung steht, die am unteren Endteil des Siedekessels (1) angeordnet ist, wobei diese Leitung (18) angepaßt ist, die kondensierten Verbrennungsprodukte von ihm abzuführen.

7. Ein Brennwertkessel nach einem oder mehreren der vorhergehenden Ansprüche, dadurch gekennzeichnet, daß das Abgas von einem Schacht (17) abgeführt wird, der seitlich von diesem Siedekessel (1) oder hinter ihm angebracht ist.

## Revendications

1. Une chaudière modulaire à haut rendement pour des systèmes de chauffage, conçue notamment pour réduire l'émission des matières polluantes, ladite chaudière (1) comprenant une multitude de modules-chaudière, chacun comprenant deux constructions latérales en métal (2), chacune desdites constructions (2) comportant un interstice fermé (3) dont la paroi latérale est dotée d'une multitude d'ailettes de refroidissement (5) de sorte à réaliser de propres échangeurs de la chaleur (9), dotés à leur haut de chambres de combustion (10) pour la combustion d'une substance gazeuse prémêlée à l'air, lesdites deux constructions latérales en métal (2) étant aptes à être montées du côté d'une ou plus constructions métalliques (6) intermédiaires, toutes comprenant un interstice fermé (7) supplémentaire dont les deux parois latérales sont dotées d'une multitude d'ailettes de refroidissement (8).

2. Un chaudière à haut rendement pour des systèmes de chauffage selon la revendication 1, caractérisée en ce que lesdits interstices fermés (7) sont aptes à contenir dans leur intérieur l'eau pour refroidir lesdits échangeurs thermiques (9).

3. Une chaudière à haut rendement selon les revendications 1 et 2, caractérisée en ce que lesdits échangeurs thermiques (9) ont une configuration interne en spirale.

4. Une chaudière à haut rendement selon l'une ou plusieurs des revendications précédentes, caractérisée en ce que ledit prémélange du gaz à l'air est effectué en introduisant du gaz à travers un conduit tubulaire (11) vers une souffleuse (12) convoyant le mélange gaz-air dans ladite chambre de combustion (10), à travers de propres conduits (13) et grilles (14).

5. Une chaudière à haut rendement selon l'une ou plusieurs des revendications précédentes, caractérisée en ce que la face supérieure de chaque chambre de combustion (10) est dotée d'une multitude d'ailettes de refroidissement (15) pour refroidir lesdites grilles (14).

6. Une chaudière à haut rendement selon l'une ou plusieurs des revendications précédentes, caractérisée en ce que chaque échangeur thermique (9) est relié, à son bas, à un conduit (18) agencé à l'extrémité inférieure de la chaudière (1), ledit conduit (18) étant propre à décharger de celle-ci les produits dérivant de la combustion.

7. Une chaudière à haut rendement selon l'une ou plusieurs des revendications précédentes, caractérisée en ce que le gaz brûlé est déchargé à partir d'une cheminée (17) agencée au flanc de ladite chaudière (1) ou derrière celle-ci.
